# EUROPEAN PATENT APPLICATION

(11) **EP 1 890 316 A1**
(43) Date of publication of application: **20.02.2008**
(21) Application number: 07250752.8
(22) Date of filing: 22.02.2007
(51) Int. Cl.: H01J 17/49, H01J 29/86

(54) **Plasma display device**

(30) Priority: 19.07.2006 KR 20060067534; 22.09.2006 KR 20060092489
(71) Applicant: LG ELECTRONICS INC., Seoul (KR)
(72) Inventor: Park, Yu, Mapo-ku Seoul 121-231 (KR); Seo, Tae Deok, Kimchun-si Kyungsangbuk-do, 740-924 (KR); Ju, Jun Hwan, Chilgok-gun, Kyungsangnam-do 718-833 (KR)
(74) Representative: Palmer, Jonathan R.

(57) **Abstract**

In the plasma display apparatus of the present invention, an external light shielding sheet configured to absorb and shield externally incident light to the greatest extent possible is attached to the front of a panel. Accordingly, there are advantages in that a black image can be implemented close to an original color, and the bright and dark room contrast can be improved accordingly. Furthermore, the thickness of the external light shielding sheet and the height of a pattern unit have a given ration in order to properly secure the aperture ratio of the external light shielding sheet. Accordingly, there is an advantage in that light emitted into the panel can transmit toward a user side to the greatest extent possible.

## Description

### Technical Field

The present invention relates, in general, to a plasma display apparatus, and more particularly, to a plasma display apparatus in which an external light shielding sheet for shielding external light incident from the outside of a panel is disposed at the front of the panel, thereby improving the bright and dark room contrast of the panel.

### Background Art

In general, a Plasma Display Panel (hereinafter, referred to as a "PDP") is an apparatus configured to generate discharge by applying voltage to electrodes disposed in discharge spaces and to display an image including characters and/or graphics by exciting phosphors with plasma generated during the discharge of gas. The PDP is advantageous in that it can be made large, light and thin, can provide a wide viewing angle in all directions, and can implement full colors and high luminance.

In the PDP constructed above, when a dark or black image is being displayed, external light arriving at the front of the panel is reflected by the phosphor elements exposed within the panel. Therefore, a problem arises because the bright and dark room contrast of the panel is lowered.

### Summary of the Invention

The present invention has been developed in an effort to provide a plasma display apparatus including an external light shielding sheet, having the advantages of preventing the reflection of light by effectively shielding external light incident on a PDP, significantly enhancing the bright and dark room contrast of the PDP, and improving the luminance of the PDP.

To address the above problems, a plasma display apparatus according to an aspect of the present invention includes a PDP, and a filter disposed at the front of the PDP. The filter comprises an external light shielding sheet including a base unit, and a plurality of pattern units formed on the base unit, and a thickness of the external light shielding sheet is set in the range of 1.01 to 2.25 times greater than a height of each of the pattern units. The thickness of the external light shielding sheet may be set in the range of 1.01 to 1.5 times greater than the height of each of the pattern units.

Furthermore, a refractive index of the pattern unit may be 0.300 to 0.999 times greater than that of the base unit. A bottom width of the pattern unit may be 1 to 3.5 times greater than a height (1/2) at the center of the height of the pattern unit. The shortest distance between neighboring pattern units may be 1.1 to 5 times greater than a bottom width of the pattern unit. The height of the pattern unit may be 0.89 to 4.25 times greater than the shortest distance between neighboring pattern units. A distance between tops of neighboring pattern units may be 1 to 3.25 times greater than the shortest distance between neighboring pattern units. The filter may comprise at least one of an anti-reflection layer configured to prevent reflection of external light, an NIR shielding layer configured to shield NIR radiated from the PDP, and an EMI shielding layer configured to shield EMI.

A filter according to another aspect of the present invention includes an external light shielding sheet including a base unit, and pattern units formed on the base unit and having a refractive index lower than that of the base unit. A thickness of the external light shielding sheet is set in the range of 1.01 to 2.25 times greater than a height of each of the pattern units.

In the plasma display apparatus of the present invention, an external light shielding sheet configured to absorb and shield externally incident light to the greatest extent possible is attached to the front of a panel. Accordingly, there are advantages in that a black image can be implemented close to an original color, and the bright and dark room contrast can be improved accordingly.

Furthermore, the thickness of the external light shielding sheet and the height of a pattern unit have a given ratio in order to properly secure the aperture ratio of the external light shielding sheet. Accordingly, there is an advantage in that light emitted into the panel can transmit toward a user side to the greatest extent possible.

### Description of Drawings

FIG. 1 is a perspective view of the construction of a PDP according to an embodiment of the present invention.
FIG. 2 is a view illustrating an embodiment of electrode arrangements of the PDP.
FIG. 3 is a timing diagram showing an embodiment of a method of driving a plasma display apparatus with one frame of an image being time-divided into a plurality of subfields.
FIGS. 4 to 7 are cross-sectional views illustrating the construction of an external light shielding sheet included in a filter according to an embodiment of the present invention.
FIG. 8 is a cross-sectional view illustrating an embodiment of the structure of the external light shielding sheet according to an embodiment of the present invention.
FIG. 9 is a schematic view illustrating the front of the external light shielding sheet according to an embodiment of the present invention.
FIGS. 10 to 13 are cross-sectional views illustrating embodiments of the construction of the filter to which the external light shielding sheet according to the present invention is applied.
FIG. 14 is a perspective view showing the construction of a plasma display apparatus according to an embodiment of the present invention.

### Detailed Description of Embodiments

A plasma display apparatus according to the present invention will now be described in detail with reference to the accompanying drawings.

It is to be understood that the plasma display apparatus of the present invention is not limited to embodiments described in the specification, but may include a number of embodiments.

The present invention will be described below in connection with the embodiments with reference to the accompanying drawings.

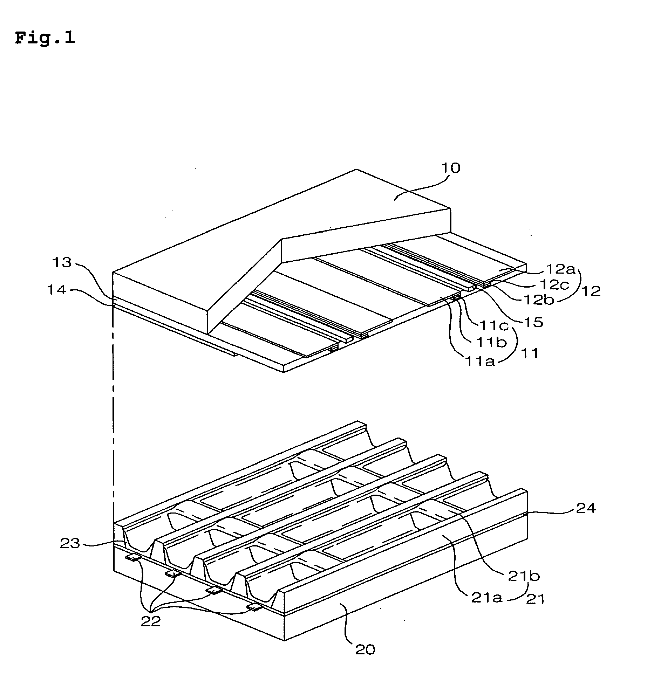

FIG. 1 is a perspective view illustrating an embodiment of the construction of a PDP.

Referring to FIG. 1, the PDP includes a scan electrode 11 and a sustain electrode 12 (i.e. , a sustain electrode pair) both of which are formed on a front substrate 10, and address electrodes 22 formed on a rear substrate 20.

The sustain electrode pair 11 and 12 includes transparent electrodes 11a and 12a, and bus electrodes 11b and 12b. The transparent electrodes 11a and 12a are generally formed of Indium-Tin-Oxide (ITO). The bus electrodes 11b and 12b may be formed using metal, such as silver (Ag) or chrome (Cr), a stack of Cr/copper (Cu)/Cr, or a stack of Cr/aluminum (A1)/Cr. The bus electrodes 11b and 12b are formed on the transparent electrodes 11a and 12a and serve to reduce a voltage drop caused by the transparent electrodes 11a and 12a having a high resistance.

Meanwhile, according to an embodiment of the present invention, the sustain electrode pair 11 and 12 may have a structure in which the transparent electrodes 11a and 12a and the bus electrodes 11b and 12b are laminated, or include only the bus electrodes 11b and 12b without the transparent electrodes 11a and 12a. Such a structure is advantageous in that it can save the manufacturing cost of the panel because it does not require the transparent electrodes 11a and 12a. The bus electrodes 11b and 12b used in the structure may also be formed using a variety of materials, such as a photosensitive material, other than the above-mentioned materials.

Black matrices (BM) 15 are arranged between the transparent electrodes 11a and 12a and the bus electrodes 11b and 12b of the scan electrode 11 and the sustain electrode 12. The black matrices 15 has a light-shielding function of reducing the reflection of external light generated outside the front substrate 10 by absorbing the external light and a function of improving the purity and contrast of the front substrate 10.

The black matrices 15 according to an embodiment of the present invention are formed in the front substrate 10. Each of the black matrices 15 may include a first black matrix 15 formed at a location at which it is overlapped with a barrier rib 21, and second black matrices 11c and 12c formed between the transparent electrodes 11a and 12a and the bus electrodes 11b and 12b. The first black matrix 15, and the second black matrices 11c and 12c, which are also referred to as a "black layer" or a "black electrode layer", may be formed at the same time and be connected physically, or may be formed separately and not be connected physically.

In the case where the first black matrix 15 and the second black matrices 11c and 12c are connected to each other physically, the first black matrix 15 and the second black matrices 11c and 12c may be formed using the same material. However, in the event that the first black matrix 15 and the second black matrices 11c and 12c are not connected to each other physically, the first black matrix 15 and the second black matrices 11c and 12c may be formed using different materials.

An upper dielectric layer 13 and a protection layer 14 are laminated on the front substrate 10 in which the scan electrodes 11 and the sustain electrodes 12 are formed in parallel. Charged particles generated by a discharge are accumulated on the upper dielectric layer 13. The upper dielectric layer 13 can serve to protect the sustain electrode pair 11 and 12. The protection layer 14 serves to protect the upper dielectric layer 13 from sputtering of charged particles generated during the discharge of a gas and also to increase emission efficiency of secondary electrons.

The address electrodes 22 are formed in such a way to cross the scan electrodes 11 and the sustain electrodes 12. Lower dielectric layers 24 and barrier ribs 21 are also formed on the rear substrate 20 in which the address electrodes 22 are formed.

A phosphor layer 23 is formed on the lower dielectric layers 24 and the surfaces of the barrier ribs 21. Each of the barrier ribs 21 includes a longitudinal barrier rib 21a and a traverse barrier rib 21b, which form a closed form. The barrier ribs 21 can separate discharge cells physically, and can also prevent ultraviolet rays generated by a discharge and a visible ray from leaking to neighboring discharge cells.

An embodiment of the present invention may be applied to not only the structure of the barrier ribs 21 shown in FIG. 1, but also the structure of barrier ribs having a variety of shapes. For example, an embodiment of the present invention may be applied to a differential type barrier rib structure in which the longitudinal barrier rib 21a and the traverse barrier rib 21b have different height, a channel type barrier rib structure in which a channel that can be used as an exhaust passage is formed in at least one of the longitudinal barrier rib 21a and the traverse barrier rib 21b, a hollow type barrier rib structure in which a hollow is formed in at least one of the longitudinal barrier rib 21a and the traverse barrier rib 21b.

In the differential type barrier rib structure, it is preferred that the traverse barrier rib 21b have a height "h" higher than that of the longitudinal barrier rib 21a. In the channel type barrier rib structure or the hollow type barrier rib structure, it is preferred that a channel or a hollow be formed in the traverse barrier rib 21b.

Meanwhile, in an embodiment of the present invention, it has been shown and described that the R, G, and B discharge cells are arranged on the same line. However, the R, G, and B discharge cells may be arranged in different forms. For example, the R, G, and B discharge cells may have a delta type arrangement in which they are arranged in a triangle. Furthermore, the discharge cells may be arranged in a variety of forms, such as square, pentagon and hexagon.

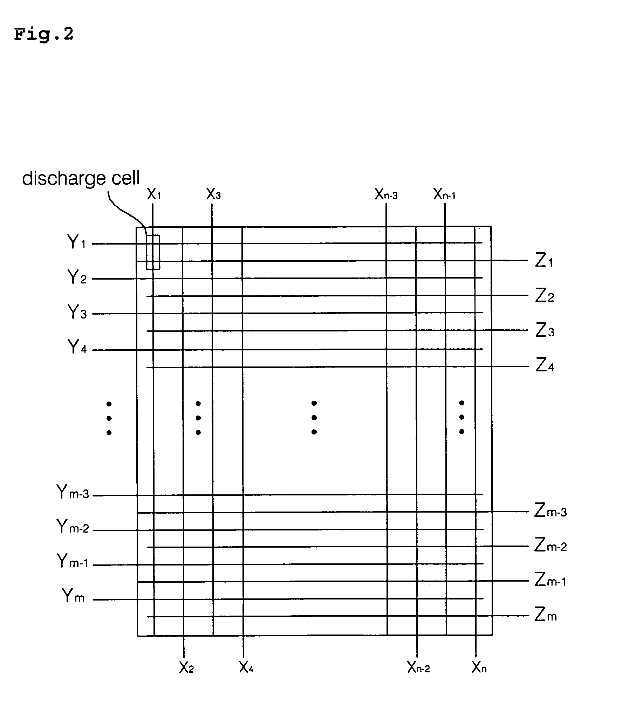

FIG. 2 is a view illustrating an embodiment of electrode arrangements of the PDP.

Referring to FIG. 2, it is preferred that a plurality of discharge cells constituting the PDP be arranged in matrix form. The plurality of discharge cells are respectively disposed at the intersections of scan electrode lines Y1 to Ym, sustain electrodes lines Z1 to Zm, and address electrodes lines X1 to Xn. The scan electrode lines Y1 to Ym may be driven sequentially or simultaneously. The sustain electrode lines Z1 to Zm may be driven at the same time. The address electrode lines X1 to Xn may be driven with them being divided into even-numbered lines and odd-numbered lines, or may be driven sequentially.

The electrode arrangement illustrated in FIG. 2 is only an embodiment of the electrode arrangements of the PDP according to the present invention. Thus, the present invention is not limited to the electrode arrangements and the driving method of the PDP, as illustrated in FIG. 2. For example, the present invention may be applied to a dual scan method in which two of the scan electrode lines Y1 to Ym are scanned at the same time. The address electrode lines X1 to Xn may be driven with them being divided into upper and lower parts on the basis of the center of the panel.

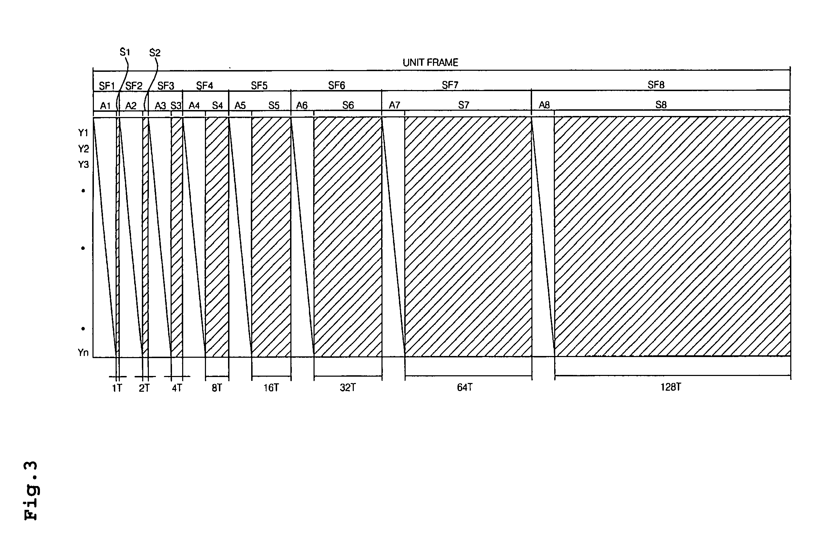

FIG. 3 is a timing diagram illustrating an embodiment of a method of driving the PDP with one frame of an image being time-divided into a plurality of subfields.

Referring to FIG. 3, a unit frame may be divided into a predetermined number (for example, eight subfields SF1, ..., SF8) in order to represent gray levels of an image. Each of the subfields SF1, ... , SF8 is divided into a reset period (not shown), address periods A1, ..., A8, and sustain periods S1, ..., S8.

In each of the address periods A1, ..., A8, data signals are applied to the address electrodes X, and scan pulses corresponding to the data signals are sequentially applied to the scan electrodes Y. In each of the sustain periods S1, ..., S8, a sustain pulse is alternately applied to the scan electrodes Y and the sustain electrodes Z. Accordingly, a sustain discharge is generated in discharge cells selected in the address periods A1, ..., A8.

The luminance of the PDP is proportional to the number of sustain discharges within the sustain periods S1, ..., S8 occupied in the unit frame. In the case where one frame constituting 1 image is represented by eight subfields and 256 gray levels, a different number of sustain pulses may be sequentially allocated to each subfield in the ratio of 1, 2, 4, 8, 16, 32, 64, and 128. Furthermore, in order to obtain the luminance of 133 gray levels, cells can be addressed during the subfield1 period, the subfield3 period, and the subfield8 period, thus generating a sustain discharge.

Meanwhile, the number of sustain discharges allocated to each subfield may be variably decided depending on the weights of subfields. That is, an example in which one frame is divided into eight subfields has been described by reference to FIG. 3. However, the present invention is not limited to the above example, but the number of subfields constituting one frame may be changed depending on design specifications. For example, the PDP can be driven by dividing one frame into eight or more subfields, such as 12 or 16 subfields.

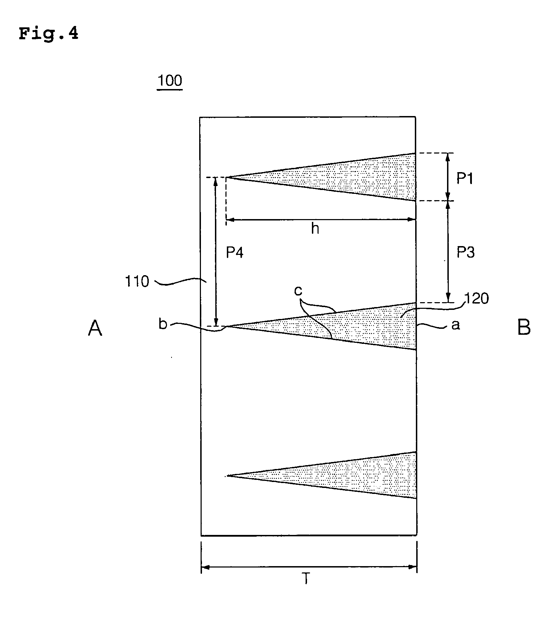

FIGS. 4 to 8 are cross-sectional views illustrating the construction of an external light shielding sheet included in a filter according to an embodiment of the present invention.

Referring to FIGS. 4. to 7, an external light shielding sheet 100 includes a base unit 110 and pattern units 120.

The base unit 110 is preferably made of a transparent plastic material (for example, a resin-based material fabricated by a UV-hardening method) so that light can pass through it smoothly. In order to enhance the effect of protecting the front of the panel, a robust glass material may be used as the material of the base unit 110.

Referring to FIG. 4, the pattern units 120 are made of material having a color darker than that of the base unit 110, and are preferably made of a dark material. For example, the pattern units 120 may be formed using carbon-based material or coated with dark dyes in order to absorb external light to the greatest extent possible.

In FIGS. 4 to 7, a bottom "a" of the external light shielding sheet is on the panel side B, and a top "b" of the external light shielding sheet is on a viewer side A to which external light is incident. The top "b" of the external light shielding sheet is disposed at the front of the panel. An external light source is generally located over the panel and, therefore, the external light can be incident on the panel with inclination from the upper side of the pattern units.

In order to shield the external light through absorption and totally reflect a visible ray emitted from the panel, thus increasing the reflectance of the panel light, it is preferred that the refractive index of each of the pattern units 120, that is, the refractive index of an outer circumference (i.e., at least a part) of the pattern units 120 be lower than that of the base unit 110.

In order to maximize the absorption and shielding of the external light incident from the panel and the total reflection of the panel light, it is preferred that the reflective index of each pattern unit 120 be 0.300 to 0.999 times greater than that of the base unit 110.

When the external light shielding sheet has a thickness T of 20 to 250 µm, a manufacturing process is convenient and an adequate optical transmittance can be obtained. The thickness T of the external light shielding sheet may be set in the range of 100 to 180 µm so that light emitted from the panel smoothly transmits through the external light shielding sheet, externally incident light is refracted and effectively absorbed and blocked by the pattern units 120, and the robustness of the sheet can be obtained.

Referring to FIG. 4, the pattern units 120 formed on the base unit 110 may have a triangle, more preferably, an isosceles triangle. The pattern unit 120 may have a bottom width P1 of 18 to 35 *µ*m. In this case, the aperture ratio for allowing light generated from the panel to be smoothly radiated to the user side A can be obtained, and external light shielding efficiency can be maximized.

The pattern units 120 may have a height "h" of 80 to 170 *µ*m. It is thus possible to form an inclined surface gradient capable of effectively absorbing external light and effectively reflecting the panel light in the relationship with the bottom width P1, and also to prevent the short of the pattern units 120. In this case, the height "h" of the pattern unit 120 is defined as the longest length from the bottom to the top of the pattern unit 120, as illustrated in FIG. 4.

In order to secure the aperture ratio for displaying a display image with an adequate luminance as the panel light is radiated to the user side A, and an optimal inclined surface of the pattern unit 120 for improving the external light shielding effect and the panel light reflection efficiency, that is, the gradient of upper and lower inclined surfaces of the pattern unit, the shortest distance P3 between two neighboring pattern units may be set in the range of 40 to 90 *µ*m, and a distance P4 between tops of two neighboring pattern units may range from 60 to 130 µm.

In this case, the shortest distance P3 between two neighboring pattern units is substantially the same as the shortest distance between bottoms of two pattern units, and the distance P4 between tops of two neighboring pattern units is substantially the same as the shortest distance between tops of two pattern units.

For the above reasons, when the distance between two neighboring pattern units, that is, the shortest distance P3 is 1.1 to 5 times the bottom width P1 of the pattern unit 120, the aperture ratio for display can be secured, and the external light shielding effect and the panel light reflection efficiency can be enhanced.

When the height "h" of the pattern unit 120 is 0.89 to 4.25 times the shortest distance P3 between two neighboring pattern units, external light incident from the upper side of the panel with inclination can be prevented from being incident on the panel, the short of the pattern units 120 can be prevented, and the reflection efficiency of the panel light can be optimized.

When the distance P4 between the tops of the two neighboring pattern units is 1 to 3.25 times the distance P3 between the bottoms of the two neighboring pattern units, the aperture ratio for displaying an image having an adequate luminance can be secured, and the panel light can be totally reflected from the inclined surfaces of the pattern unit 120.

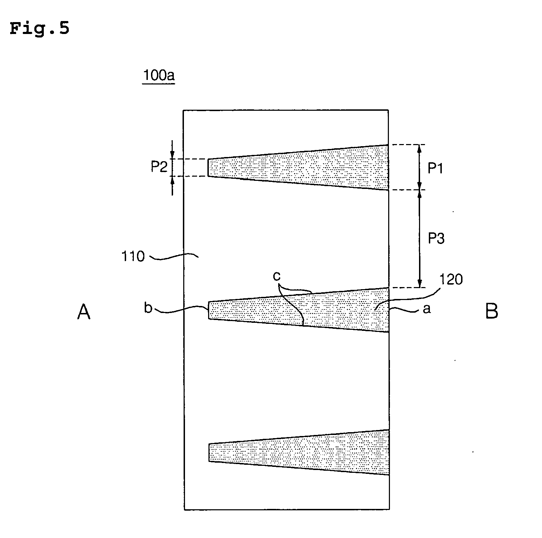

Referring to FIG. 5, each of the pattern units 120 may have a trapezoid in which the top "b" has a specific width P2. In this case, the width P2 of the top "b" is set smaller than the width P1 of the bottom "a". The width P2 of the top of the pattern unit 120 may be set in the range of 9 *µ*m or less. Accordingly, in the relationship with the bottom width P1, an inclined surface gradient, which effectively enables the absorption of external light and the reflection of panel light, can be formed.

As described above, the width is widened from the top "b" to the bottom "a" of the pattern units 120, so that an inclined surface, which has the highest aperture ratio and can shield external light to the greatest extent possible, can be formed.

The following Table 1 is an experimental result on the aperture ratio and the external light shielding effect of the external light shielding sheet depending on the bottom width P1 of the pattern unit of the external light shielding sheet 100 and a width at the center (h/2) of the height of the pattern unit. In this case, the bottom width of the pattern unit was set to 23 µm.

**Table 1**

| Bottom Widht (µm) of Pattern Unit | Center Width (µm) of Pattern Unit | Aperture Ratio (%) | External Light Shielding Effect |
|---|---|---|---|
| 23.0 | 23.0 | 50 | ○ |
| 23.0 | 22.0 | 55 | ○ |
| 23.0 | 20.0 | 60 | ○ |
| 23.0 | 18.0 | 65 | ○ |
| 23.0 | 16.0 | 70 | ○ |
| 23.0 | 14.0 | 72 | ○ |
| 23.0 | 12.0 | 75 | ○ |
| 23.0 | 10.0 | 78 | ○ |
| 23.0 | 9.0 | 80 | ○ |
| 23.0 | 8.0 | 83 | Δ |
| 23.0 | 6.0 | 85 | Δ |
| 23.0 | 5.0 | 90 | X |

In table 1, and the other tables presented herein, a circle symbol in a column indicates a high or positive degree of the effect stated in the column heading. A cross indicates a low or negative degree, and a triangle indicates an intermediate degree.

Referring to Table 1, in the case where the bottom width P1 of the pattern unit of the external light shielding sheet 100 is 23.0 µm, if the width at the center (h/2) of the pattern unit is set to 23 µm, light emitted from the interior of the panel can pass through the user side, so that the aperture ratio of 50 % or more in which an image is displayed can be secured. However, if the width at the center (h/2) of the pattern unit is 8 µm or less, an efficiency in which external light is shielded can be decreased. If the width at the center (h/2) of the pattern unit is 5 µm or less, external light can be incident on the panel.

Thus, when the width at the center (h/2) of the pattern unit of the external light shielding sheet is 1 to 3.5 or 1.5 to 2.5 times greater than the bottom width P2, external light can be prevented from being incident on the panel, and an adequate aperture ratio can be secured.

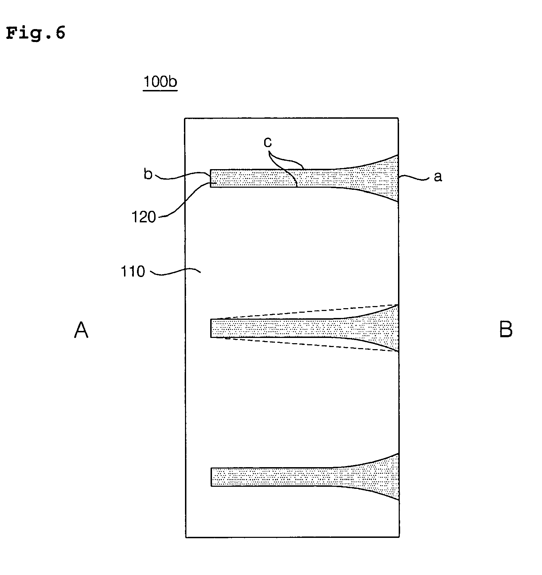

Referring to FIG. 6, the pattern unit 120 of the external light shielding sheet 100b may have a curved shape in which an inclined surface of an outer circumference is bent toward the inside of the panel. In this case, efficiency in which external light is refracted from the inclined surface of the pattern unit to the inside of the pattern unit and is thus shielded can be improved. Not only the inclined surface, but also the top and bottom of the pattern unit have a curve having a specific curvature.

Furthermore, the inclined surface of the pattern unit may have an inclined surface having a different gradient, not a curved shape.

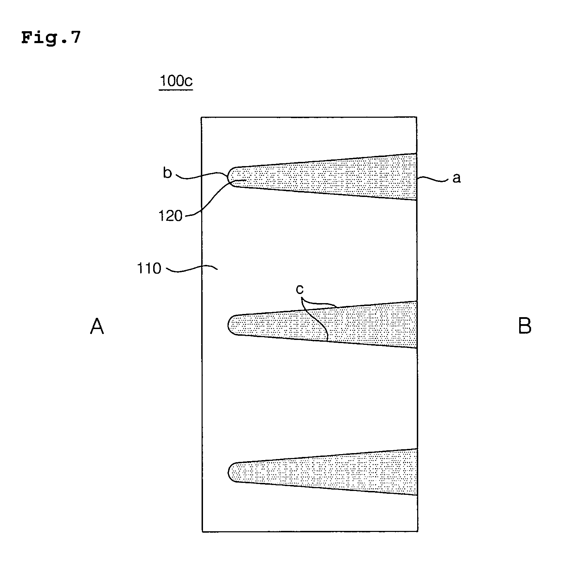

The shapes of the right and left inclined surfaces of the pattern unit 120 may be curved, as illustrated in FIG. 6. The top "b" of the pattern unit may have a curved shape, as illustrated in FIG. 7. It is thus possible to improve a problem in which a pattern unit having a very small shape is difficult to have a triangle.

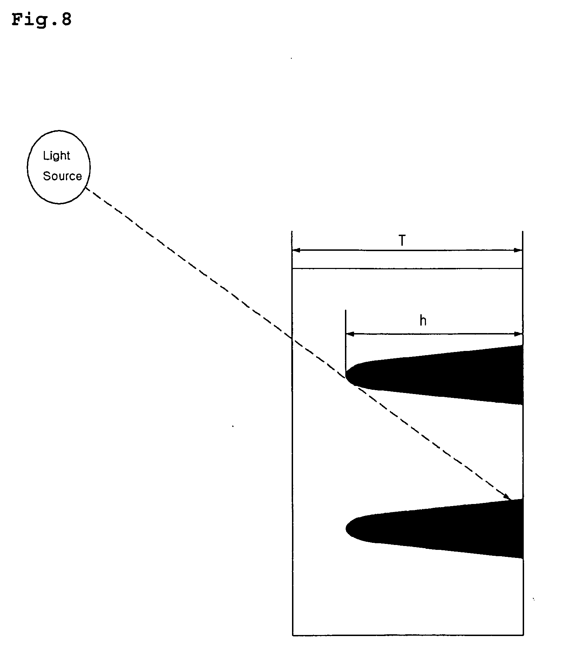

FIG. 8 is a cross-sectional view illustrating an embodiment of the structure of the external light shielding sheet according to an embodiment of the present invention in order to describe the thickness of the external light shielding sheet and the height of the pattern unit.

Referring to FIG. 8, in order to secure the roughness of the external light shielding sheet including the pattern units and also to secure the transmittance of a visible ray emitted from the panel so as to display an image, it is preferred that the external light shielding sheet have a thickness T of 100 µm to 180 µm.

When the height "h" of each of the pattern units including in the external light shielding sheet is 80 to 35 µm, the fabrication of the pattern units is the most convenient, the external light shielding sheet can have an adequate aperture ratio, and the external light shielding effect and the effect of reflecting light emitted from the panel can be maximized.

The height "h" of the pattern unit may be varied depending on the thickness T of the external light shielding sheet. In general, external light, being incident on the panel to affect a lowering in the bright and dark room contrast, is mainly located at a location higher than the panel. Thus, in order to effectively shield external light incident on the panel, it is preferred that the height "h" of the pattern unit have a value range with respect to the thickness T of the external light shielding sheet.

As the height "h" of the pattern unit increases as illustrated in FIG. 8, the thickness of the base unit at the top of the pattern unit becomes thin, resulting in insulating breakdown. As the height "h" of the pattern unit decreases, external light having an angle range is incident on the panel, thereby hindering adequate shielding of the external light.

The following Table 2 is an experimental result on insulating breakdown and the external light shielding effect of the external light shielding sheet depending on the thickness T of the external light shielding sheet and the height "h" of the pattern unit.

**Table 2**

| Sheet Thicknes (T) | Height of Pattern Unit | Insulating Breakdown | External Light Shielding Effect |
|---|---|---|---|
| 120 µm | 120 µm | ○ | ○ |
| 120 µm | 115 µm | Δ | ○ |
| 120 µm | 110 µm | X | ○ |
| 120 µm | 105 µm | X | ○ |
| 120 µm | 100 µm | X | ○ |
| 120 µm | 95 µm | X | ○ |
| 120 µm | 90 µm | X | ○ |
| 120 µm | 85 µm | X | ○ |
| 120 µm | 80 µm | X | ○ |
| 120 µm | 75 µm | X | Δ |
| 120 µm | 70 µm | X | Δ |
| 120 µm | 65 µm | X | Δ |
| 120 µm | 60 µm | X | Δ |
| 120 µm | 55 µm | X | Δ |
| 120 µm | 50 µm | X | X |

Referring to Table 2, when the thickness T of the external light shielding sheet is 120 µm, if the height "h" of the pattern unit is set to 120 µm or more, the failure rate of a product may increase since there is a danger that the pattern unit may experience insulating breakdown. If the height "h" of the pattern unit is set to 110 µm or less, the failure rate of the external light shielding sheet may decrease since there is no danger that the pattern unit may experience insulating breakdown. However, when the height of the pattern unit is set to 85 µm or less, an efficiency in which external light is blocked by the pattern unit may decrease. When the height of the pattern unit is set to 60 µm or less, external light can be incident on the panel.

When the thickness T of the external light shielding sheet is 1.01 to 2.25 times greater than the height "h" of the pattern unit, insulating breakdown at the top portion of the pattern unit can be prevented, and external light can be prevented from being incident on the panel. In order to increase the amount of reflection of light emitted from the panel and to second a viewing angle while preventing insulating breakdown and external light from being incident on the panel, the thickness T of the external light shielding sheet may be in the range of 1.01 to 1.5 times greater than the height "h" of the pattern unit.

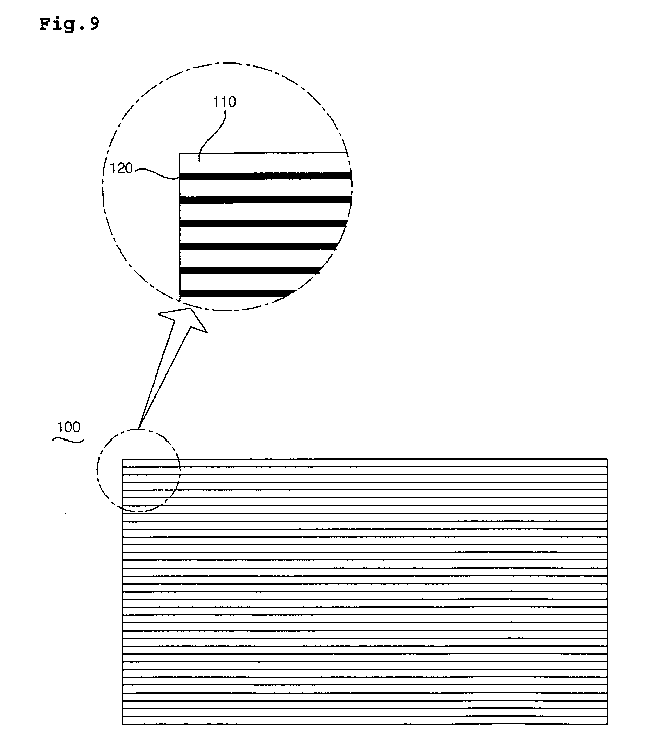

FIG. 9 is a schematic view illustrating the front of the external light shielding sheet according to an embodiment of the present invention.

Referring to FIG. 9, in the external light shielding sheet 100 according to an embodiment of the present invention, it is preferred that the pattern units 120 be formed in parallel on the base unit 110 at given intervals. However, the present invention is not limited thereto, but other pattern units may be further formed in a direction to cross the pattern units 120 illustrated in FIG. 9.

Furthermore, in order to prevent the Moire phenomenon that may be generated due to the interference of the black matrix, the black layer, the barrier ribs, and the bus electrodes formed within the panel, and the pattern units, the pattern units 120 may be inclined from the top or bottom of the external light shielding sheet at a given tilt angle.

The Moire phenomenon refers to patterns of a low frequency, which occur as patterns of a similar lattice shape are overlapped. For example, the Moire phenomenon may refer to wave patterns appearing when mosquito nets are overlapped.

The following Table 3 is an experimental result on whether the Moire phenomenon has occurred, and the external light shielding effect, depending on the ratio of the bottom width P1 of the pattern unit of the external light shielding sheet and the width of the bus electrode formed in the front substrate of the panel. In this case, the width of the bus electrode was 90 µm.

**Table 3**

| Bottom Width of Pattern Unit/ Width of Bus Electrode | Moire Phenomenon | External Light Shielding Effect |
|---|---|---|
| 0.10 | Δ | X |
| 0.15 | Δ | X |
| 0.20 | X | Δ |
| 0.25 | X | ○ |
| 0.30 | X | ○ |
| 0.35 | X | ○ |
| 0.40 | X | ○ |
| 0.45 | Δ | ○ |
| 0.50 | Δ | ○ |
| 0.55 | ○ | ○ |
| 0.60 | ○ | ○ |

From Table 3, it can be seen that the bottom width of the pattern unit is 0.2 to 0.5 times greater than the bus electrode width, the Moire phenomenon can be reduced, and external light incident on the panel can be decreased. In order to prevent the Moire phenomenon and effectively shield external light while securing the aperture ratio for radiating panel light, it is preferred that the bottom width of the pattern unit be 0.25 to 0.4 times greater than the width of the bus electrod.

**Table 4**

| Bottom Width of Pattern Unit/Top Width of Longitudinal Barrier Rib | Moire Phenomenon | External Light Shielding Effect |
|---|---|---|
| 0.10 | ○ | X |
| 0.15 | Δ | X |
| 0.20 | Δ | X |
| 0.25 | Δ | X |
| 0.30 | X | Δ |
| 0.35 | X | Δ |
| 0.40 | X | ○ |
| 0.45 | X | ○ |
| 0.50 | X | ○ |
| 0.55 | X | ○ |
| 0.60 | X | ○ |
| 0.65 | X | ○ |
| 0.70 | Δ | ○ |
| 0.75 | Δ | ○ |
| 0.80 | Δ | ○ |
| 0.85 | ○ | ○ |
| 0.90 | ○ | ○ |

From Table 4, it can be seen that when the bottom width of the pattern unit is 0.3 to 0.8 times greater than the width of the longitudinal barrier rib, the Moire phenomenon can be reduced, and external light incident on the panel can be decreased. In order to prevent the Moire phenomenon and also effectively shield external light while securing the aperture ratio for discharging the panel light, it is preferred that the bottom width of the pattern unit be 0.4 to 0.65 times greater than the width of the longitudinal barrier rib.

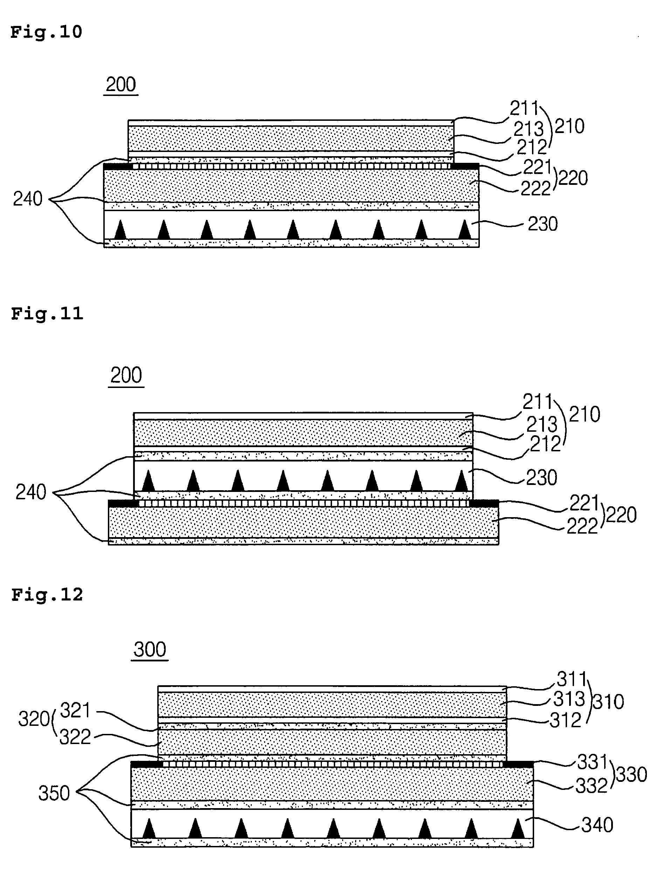

FIGS. 10 to 13 are cross-sectional views illustrating the construction of a filter according to an embodiment of the present invention. The filter formed at the front of the PDP may include an Anti-Reflection (AR)/Near Infrared (NIR) sheet, an Electromagnetic Interference (EMI) shielding sheet, an external light shielding sheet, an optical characteristic sheet, and so on.

Referring to FIGS. 10 to 13, an AR/NIR sheet 210 includes an AR layer 211 disposed at the front of a base sheet 213 made of a transparent plastic material, and a NIR shielding layer 212 disposed at the rear of the base sheet 213. The AR layer 211 serves to prevent externally incident light from reflecting therefrom, thus decreasing a glairing phenomenon. The NIR shielding layer 212 serves to shield NIR radiated from the panel, so that signals transferred using infrared rays, such as a remote controller, can be transferred normally.

The base sheet 213 may be formed using a variety of materials by taking use conditions or transparency, an insulating property, a heat-resistance property, mechanical strength, etc. into consideration. For example, the materials of the base sheet 213 may include poly polyester-based resin, polyamid-based resin, polyolefin-based resin, vinyl-based resin, acryl-based resin, cellulose-based resin, and so on. In general, it is preferred that the base sheet 213 be formed using a polyester-based material, such as polyethylene tereophthalate (PET) and polyethylene naphthalate (PEN) having a good transparency and transmittance of a visible ray of 80 % or more. The thickness of the base sheet 213 may be preferably set in the range of 50 to 500 *µ*m considering that it can prevent damage to the sheet by overcoming weak mechanical strength and it can save cost by having an necessary thickness.

The AR layer 211 may generally include an anti-reflection layer. The NIR shielding layer 212 is formed using an NIR absorbent which can be utilized and in which NIR transmittance of a wavelength band of 800 to 1100 nm, emitted from the PDP, is 20 % or less, preferably, 10 % or less. The NIR absorbent may be formed using materials, such as NIR absorbent pigments having a high optical transmittance of a visible ray region, such as polymethine-base, cyanine-based compound, phthalocyanine-based compound, naphthalocyanine-based compound, buthalocyanine-based compound, anthraquinone-based compound, dithiol-based compound, imonium-based compound, diimmonium-based compound.

The EMI shielding sheet 220 includes an EMI shielding layer 221 disposed at the front of a base sheet 222 made of a transparent plastic material. The EMI shielding layer 221 functions to shield EMI, thereby preventing EMI, radiated from the panel, from being emitting externally. In general, the EMI shielding layer 221 is formed to have a mesh structure using a conductive material.

In order to ground the EMI shielding layer, a conductive material is entirely coated on the outside of the pattern, i.e. , an invalid region of the EMI shielding sheet 220 on which an image is not displayed. Materials of the metal layer forming the pattern of the EMI shielding sheet may include metal with an enough conductivity to shield electronic waves, such as gold, silver, iron, nickel, chrome and aluminum. The materials may be used as a single material, an alloy or multiple layers.

If a black oxidization process is performed on the bottom of the pattern, the bright and dark room contrast of a panel, such as the black matrix formed within the panel, can be improved. The black oxidization process is performed on at least one side of the outer circumference of the pattern so that it has a color darker than the base unit. In this case, when external light such as sunlight or electrical light is incident on the panel, the blackened portion can prohibit and absorb reflection, thus improving a display image of the PDP with a high contrast.

The black oxidization process may include a plating method. In this case, the black oxidization process can be easily performed on all the surfaces of the pattern since adherence force of the plating method is excellent. The plating materials may include one or more compounds selected from copper, cobalt, nickel, zinc, tin and chrome, for example, oxide compounds such as copper oxide, copper dioxide and oxidized steel.

It is preferred that the pattern width of the EMI shielding layer be set in the range of 10 to 30 *µ*m. In this case, a sufficient electrical resistance value for EMI shielding can be obtained, and the aperture ratio for an adequate optical transmittance can be secured.

In general, an external light source exists in a room, outside the room or over the head of a user. The external light shielding sheet 230 is used to represent a black image of the PDP as dark by effectively shielding the external light.

An adhesive 240 is formed between the AR/NIR sheet 210, the EMI shielding sheet 220, and the external light shielding sheet 1030, so that each of the sheets and the filter can be firmly adhered at the front of the panel. It is preferred that the base sheets included between the respective sheets be formed using substantially the same material by taking the convenience of fabrication of the filter into consideration.

Meanwhile, there is shown in FIG. 10 that the AR/NIR sheet 210, the EMI shielding sheet 220 and the external light shielding sheet 1030 are sequentially laminated. However, as illustrated in FIG. 11, the AR/NIR sheet 210, the external light shielding layer 1030, and the EMI shielding sheet 220 may be laminated in this sequence. Furthermore, the lamination sequence of the respective sheets may be changed by those skilled in the art. Incidentally, at least one of the sheets may be omitted.

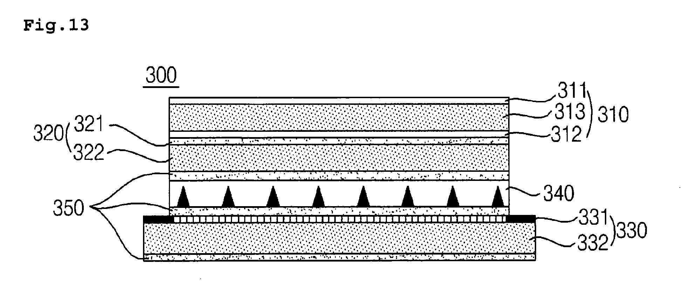

Referring to FIGS. 12 and 13, a filter 300 disposed at the front of a panel may further include an optical characteristic sheet 320 in addition to the AR/NIR sheet 310, the EMI shielding sheet 330 and the external light shielding sheet 340 as illustrated in FIGS. 10 and 11. The optical characteristic sheet 320 functions to improve a color temperature and a luminance characteristic of light incident from the panel and. The optical characteristic sheet 320 includes a base sheet 322 made of a transparent plastic material, and an optical characteristic layer 321 made of dyes and an adhesive and laminated at the front or rear of the base sheet 322.

At least one of the base sheets included each of the sheets illustrated in FIGS. 10 to 13 may be omitted. One of the base sheets may be formed using glass not a plastic material in order to improve the function of protecting the panel. It is preferred that the glass be spaced apart from the panel at a given distance.

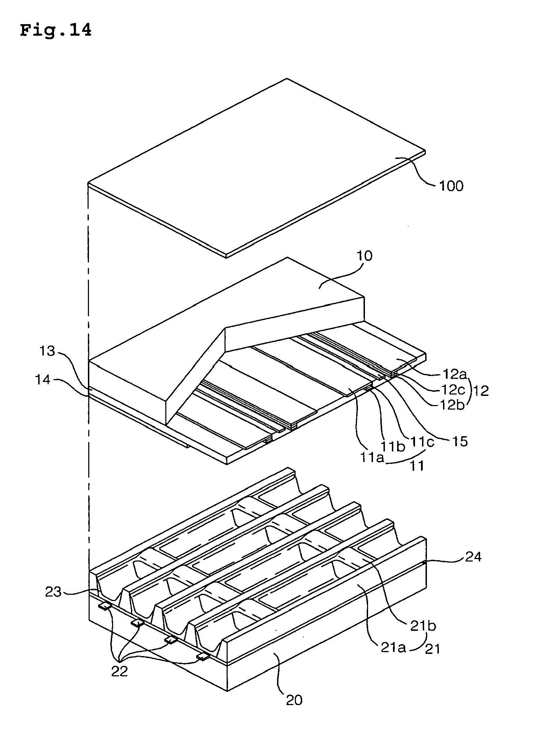

FIG. 14 is a perspective view showing the construction of a plasma display apparatus according to an embodiment of the present invention.

Referring to FIG. 14, a filter 100 is preferably formed at the front of the PDP according to an embodiment of the present invention. The filter 100 may include an external light shielding sheet, an AR sheet, a NIR shielding sheet, an EMI shielding sheet, an optical characteristic sheet, and so on.

An adhesive layer of 10 to 30 µm in thickness is layered between the filter 100 and the panel, thereby facilitating the attachment of the panel and the filter 100 and also increasing the adhesive property. In order to protect the panel from external pressure, etc., an adhesive layer having a thickness of 30 to 120 µm may be formed between the filter 100 and the panel.

As described above, in accordance with the plasma display apparatus of the present invention, external light incident on a panel can be shielded, and therefore the bright and dark room contrast can be improved. In order to improve the bright and dark room contrast of a PDP, a black matrix, an anti-reflection layer attached to a conventional filter, and so on have been used. In the present invention, however, external light incident on up to discharge cells of the panel can be effectively shielded. Accordingly, it is expected that the bright and dark room contrast of the panel can be improved significantly.

While the present invention has been described with reference to the particular illustrative embodiments, it is not to be restricted by the embodiments but only by the appended claims. It is to be appreciated that those skilled in the art can change or modify the embodiments without departing from the scope of the present invention.

## Claims

1. A plasma display apparatus, comprising:
a Plasma Display Panel (PDP); and
a filter disposed at the front of the PDP,
wherein the filter comprises an external light shielding sheet including a base unit, and a plurality of pattern units formed on the base unit, and
a thickness of the external light shielding sheet is set in the range of 1.01 to 2.25 times greater than a height of each of the pattern units.

2. The plasma display apparatus of claim 1, wherein the thickness of the external light shielding sheet is set in the range of 1.01 to 1.5 times greater than the height of each of the pattern units.

3. The plasma display apparatus of claim 1, wherein a refractive index of the pattern unit is smaller than that of the base unit.

4. The plasma display apparatus of claim 1, wherein a refractive index of the pattern unit is 0.300 to 0.999 times greater than that of the base unit.

5. The plasma display apparatus of claim 1, wherein a bottom width of the pattern unit is 1 to 3.5 times greater than a width at the center of the height of the pattern unit.

6. The plasma display apparatus of claim 1, wherein a bottom width of the pattern unit is 1.5 to 2.5 times greater than a width at the center of the height of the pattern unit.

7. The plasma display apparatus of claim 1, wherein the shortest distance between neighboring pattern units is 1.1 to 5 times greater than a bottom width of the pattern unit.

8. The plasma display apparatus of claim 1, wherein the shortest distance between neighboring pattern units is 1.5 to 3.5 times greater than a bottom width of the pattern unit.

9. The plasma display apparatus of claim 1, wherein the height of the pattern unit is 0.89 to 4.25 times greater than the shortest distance between neighboring pattern units.

10. The plasma display apparatus of claim 1, wherein the height of the pattern unit is 1.5 to 3 times greater than the shortest distance between neighboring pattern units.

11. The plasma display apparatus of claim 1, wherein a distance between tops of neighboring pattern units is 1 to 3.25 times greater than the shortest distance between neighboring pattern units.

12. The plasma display apparatus of claim 1, wherein a distance between tops of neighboring pattern units is 1.2 to 2.5 times greater than the shortest distance between neighboring pattern units.

13. The plasma display apparatus of claim 1, wherein the filter comprises at least one of an anti-reflection layer configured to prevent reflection of external light, an NIR shielding layer configured to shield NIR radiated from the PDP, and an EMI shielding layer configured to shield EMI.

14. A filter comprising:
an external light shielding sheet including a base unit, and pattern units formed on the base unit and having a refractive index lower than that of the base unit,
wherein a thickness of the external light shielding sheet is set in the range of 1.01 to 2.25 times greater than a height of each of the pattern units.

15. The filter of claim 14, wherein the thickness of the external light shielding sheet is 1.01 to 1.5 times greater than the height of each of the pattern units.

16. The filter of claim 14, wherein a bottom width of the pattern unit is 1 to 3.5 times greater than a width at the center of the height of the pattern unit.

17. The filter of claim 14, wherein the shortest distance between neighboring pattern units is 1.1 to 5 times greater than a bottom width of the pattern unit.

18. The filter of claim 14, wherein the height of the pattern unit is 0.89 to 4.25 times greater than the shortest distance between neighboring pattern units.

19. The filter of claim 14, wherein a distance between tops of neighboring pattern units is 1 to 3.25 times greater than the shortest distance between neighboring pattern units.

20. The filter of claim 14, further comprising at least one of an anti-reflection layer configured to prevent reflection of external light, an NIR shielding layer configured to shield NIR radiated from the PDP, and an EMI shielding layer configured to shield EMI.
